# EUROPEAN PATENT SPECIFICATION

(11) **EP 3 114 376 B1**
(45) Date of publication and mention of the grant of the patent: **16.05.2018**
(21) Application number: 15701926.6
(22) Date of filing: 16.01.2015
(51) Int. Cl.: F16J 15/08

(54) **GASKET COMPONENT WITH HALF-STOP AND METHOD OF MANUFACTURING**
DICHTUNGSKOMPONENTE MIT HALBSTOPPER UND VERFAHREN ZUR HERSTELLUNG
ÉLÉMENT DE JOINT D'ÉTANCHÉITÉ DOTÉ D'UN DEMI-ARRÊT ET PROCÉDÉ DE FABRICATION

(30) Priority: 17.01.2014 US 201461928664 P
(43) Date of publication of application: 11.01.2017
(73) Proprietor: Federal-Mogul Corporation, Southfield, MI 48034 (US)
(72) Inventor: DAVIDSON, Michael, J., Ann Arbor, MI 48104 (US)
(74) Representative: Becker Kurig Straus
(86) International application number: PCT/US2015/011737
(87) International publication number: WO 2015/109171

(56) References cited:
- EP-A1- 0 574 166
- WO-A1-2006/056151
- US-A1- 2002 000 696

## Description

### CROSSE REFERENCE TO RELATED APPLICATION

### BACKGROUND OF THE INVENTION

### 1. Field of the Invention

This invention relates generally to gaskets for providing a seal between parts of an internal combustion engine, and methods of manufacturing the same.

### 2. Related Art

Gaskets are typically used to establish a gas and fluid tight seal between two parts clamped together, such as a cylinder head and an engine block of an internal combustion engine. Such gaskets oftentimes include a functional layer having an embossment, also referred to as a sealing bead, to facilitate the tight seal. The functional layer with the embossment is compressed, optionally with one or more additional functional layers or distance layers, in effort to establish the gas and fluid tight seal. However, when clamping the gasket between the cylinder head and the engine block, damage can occur to the embossment by over-compression. If the embossment is substantially flattened, the embossment loses its ability to exert a high compression sealing pressure, and fatigue cracks can form in the area of the embossment. Thus, a planar stopper is typically incorporated into the cylinder head gasket to restrict compression of the embossment between the cylinder head and the engine blok (see EP-A-0574166). The stopper is typically a separate component spaced from the embossment.

Federal-Mogul has introduced high performance cylinder head gaskets including stoppers and high-strength, dynamic embossment technology. An exemplary gasket provided by Federal-Mogul includes a pair of functional layers each including a full embossment. Each full embossment presents a convex surface facing toward the other full embossment. A planar stopper is welded to one of the functional layers adjacent the full embossment. A half embossment, referred to as a Flexstop®, is formed in the other functional layer and is axially aligned with the stopper. The half embossment extends inwardly toward the stopper in the same direction as the full embossment. The half embossment maintains a load on the stopper while under loading and joint dynamics, such as headlift.

### SUMMARY OF THE INVENTION

One aspect of the invention provides a gasket including a functional layer and a stopper layer for sealing parts of an internal combustion engine. The functional layer extends radially from a first edge surrounding a first opening to a second edge. The functional layer includes a full embossment disposed between the first edge and the second edge, and a half embossment disposed between the first edge and the full embossment. The stopper layer is attached to the functional layer between the first edge and the full embossment. The stopper layer also includes a half embossment aligned with the half embossment of the functional layer.

The invention also provides a method of manufacturing a gasket for sealing parts of an internal combustion engine. The method includes providing a functional layer extending radially from a first edge surrounding a first opening to a second edge; and forming a full embossment in the functional layer between the first edge and the second edge. The method also includes attaching a stopper layer to the functional layer adjacent the first edge. After attaching the stopper layer to the functional layer, the method includes forming a half embossment in the functional layer while simultaneously forming a half embossment in the stopper layer aligned with the half embossment of the functional layer.

The gasket provided by the invention can incorporate the high-strength, dynamic embossment technology in essentially a single layer, i.e. the stopper layer joined to the functional layer, and by a single process step. The half embossments maintain the load on the stopper layer, limit compression on the full embossment, and protect the full embossment from combustion gases when the gasket is compressed between the parts of the internal combustion engine.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a radial cross-sectional side view of a gasket component according to one exemplary embodiment of the invention;
Figure 2 is a perspective, exploded view of a cylinder head gasket including the gasket component disposed between an engine block and cylinder head of an internal combustion engine according to an exemplary embodiment;
Figure 3 is a radial cross-sectional side view of the gasket component of Figure 1 compressed between an engine block and cylinder head;
Figures 4-7 are radial cross-sectional side views of the gasket component according to other exemplary embodiments of the invention; and
Figure 8 is a radial cross-sectional side view of a comparative gasket component.

### DESCRIPTION OF THE ENABLING EMBODIMENT

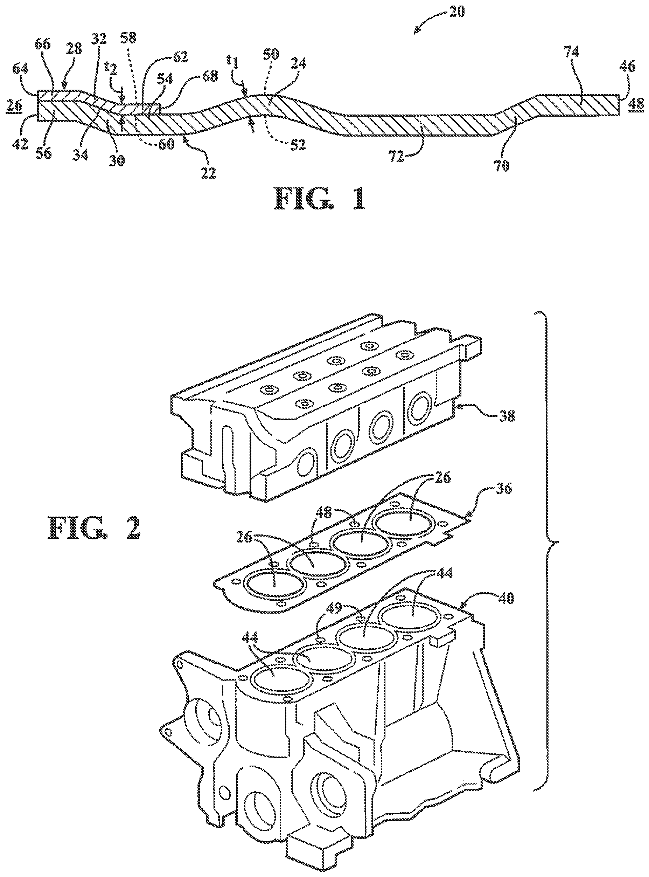

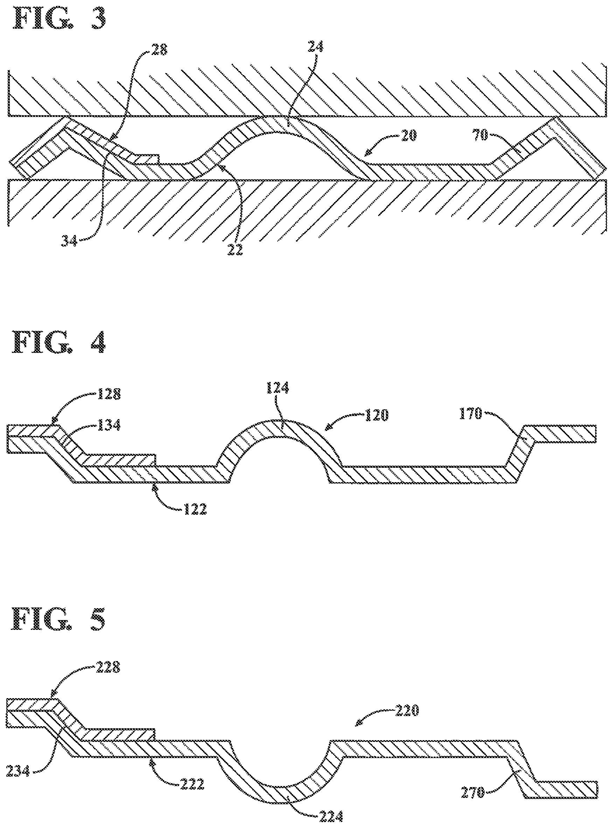

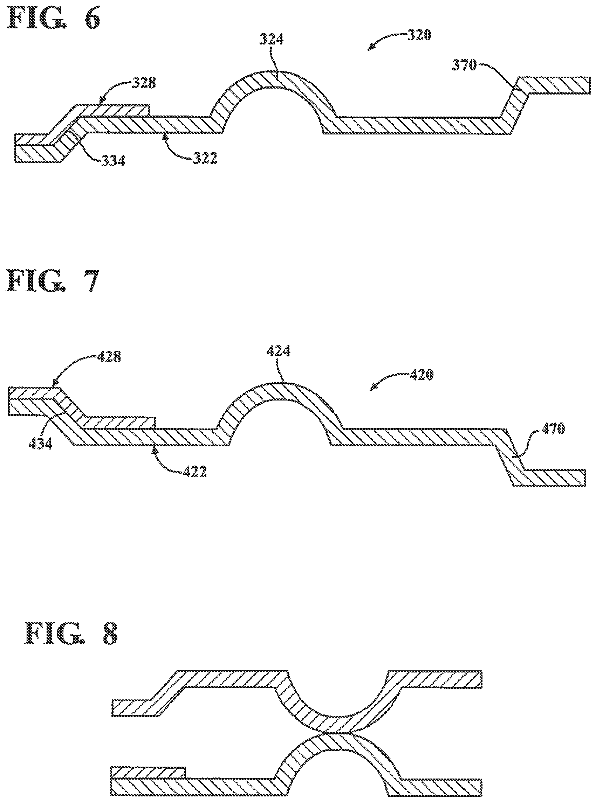

Referring to the Figure 1, a gasket component **20** for providing a gas and fluid seal between two parts is generally shown. The gasket component **20** comprises a functional layer **22** including a full embossment **24** spaced from a first opening **26,** such as a combustion chamber opening, and a stopper layer **28** disposed between the first opening **26** and the full embossment **24.** The stopper layer **28** and the functional layer **22** each include a half embossment **30, 32,** which together are referred to as a half-stop **34,** located between the first opening **26** and the full embossment **24.** The half-stop **34** is formed in a single process step and limits compression on the full embossment **24** when the gasket component **20** is compressed between the two parts. Thus, the gasket component **20** can incorporate high-strength, dynamic embossment technology in essentially a single layer and by a single process step. An exemplary cylinder head gasket **36** including the gasket component **20** is shown in Figure 2. An enlarged view of the gasket component **20** compressed between the two parts is shown in Figure 3. Other exemplary gasket components **20** having designs that differ from the design of Figure 1 are shown in Figures 4-7. Figure 8 illustrates a comparative gasket component including the previously developed Flexstop® feature.

The gasket component **20** of Figure 1 is typically used in combination with other layers to provide a multilayer static gasket, such as the cylinder head gasket **36** shown in Figure 2. The cylinder head gasket **36** provides a tight gas and fluid seal between the first part, such as a cylinder head **38,** and the second part, such as an engine block **40** of an internal combustion engine. However, the gasket component **20** could alternatively be used in other gasket applications, such as those typically utilizing embossments and stoppers. The gasket component **20** can also be used independently without any other layers.

The functional layer **22 of** the gasket component **20** is typically formed of steel, such as fully hardened spring steel, or another flexible metal. The functional layer **22** of the gasket component **20** could alternatively be formed of rubber, or another non-metal material. The functional layer **22** includes a first edge **42** presenting the first opening **26** for aligning with a bore opening **44** of the engine block **40.** When the gasket component **20** is used in the cylinder head gasket **36,** the gasket component **20** typically presents four of the first openings **26,** as shown in Figure 2. The functional layer **22** also typically includes a second edge **46** presenting a second opening **48** for aligning with a secondary opening **49** of the engine block **40** and cylinder head **38.** The secondary opening **49** of the engine block **40** can function as a bolt hole or as an oil or coolant passage. When the gasket component **20** is used in the cylinder head gasket **36**, the gasket component **20** includes a plurality of the second openings **48.**

The functional layer **22** of the gasket component **20** includes an upper surface **50** and an oppositely facing lower surface **52** presenting a thickness **t₁** therebetween, as shown in Figure 1. When the gasket component **20** is used to form the cylinder head gasket **36**, the upper surface **50** faces toward the cylinder head **38**, and the lower surface **52** faces toward the engine block **40.** Alternatively, the gasket component **20** could be flipped such that the upper surface **50** faces toward the engine block **40,** and the lower surface **52** faces toward the cylinder head **38.** The thickness **t₁** of the functional layer **22** is preferably consistent from the first opening **26** to the second opening **48** and throughout the functional layer **22**. However, the thickness **t₁** of the functional layer **22** could vary slightly between the first opening **26** and the second opening **48** due to steel thickness tolerances. In one embodiment, the thickness **t₁** of the functional layer **22** is from about 0.1 mm to about 03 mm.

As shown in Figure 1, the functional layer **22** includes the full embossment **24,** also referred to as a full bead, located between the first opening **26** and the second opening **48.** The full embossment **24** extends circumferentially and continuously around the first opening **26** and facilitates the seal about the first opening **26** when the gasket component **20** is compressed between the two parts. When the gasket component **20** is used in the cylinder head gasket **36**, the full embossment **24** provides a gas and fluid-tight seal about the bore opening **44** of the engine block **40.**

The upper surface **50** along the full embossment **24** presents a convex shape and the lower surface **52** presents a concave shape. As shown in Figure 1, the full embossment. **24** extends outwardly relative to adjacent sections of the upper surface **50** of the functional layer **22**. The upper surface **50** and the lower surface **52** of the functional layer **22** are typically planar around the entire circumference of the full embossment **24.** In other words, the functional layer **22** is typically flat in the areas surrounding the full embossment **24.** The planar portion of the upper surface **50** and the planar portion of the lower surface **52** disposed between the full embossment **24** and the half embossment **30** are together referred to as a first planar area **54.** The planar portion of the upper surface **50** and the planar portion of the lower surface **52** disposed between the half embossment **30** and the first edge **42** are together referred to as a second planar area **56.** When the gasket component **20** is used in the cylinder head gasket **36,** the first planar area **54** and the second planar area **56** of the functional layer **22** are parallel to an upper surface of the engine block **40** and a lower surface of the cylinder head **38.** It is noted that although the terms "upper" and "lower' are used when describing the surfaces of the functional layer **22,** the upper surface **50** could be disposed below the lower surface **52.**

The half embossment **30** of the functional layer **22** is disposed radially between the first edge **42** and the full embossment **24,** and it is axially aligned with the half embossment **32** of the stopper layer **28.** In the exemplary embodiments shown in the Figures, the functional layer **22** is bent in two locations to form the half embossment **30.** Thus, the half embossment **30** extends at an angle relative to the first planar area **54** and the second planar area **56.** In this case, the upper surface **50** and the lower surface **52** along the first planar area **54** are parallel to one another. The upper surface **50** and the lower surface **52** along the half embossment **30** are also parallel to one another but disposed at an angle relative to the adjacent first and second planar areas **54, 56.** In the exemplary embodiments, the first half embossment **30** extends at an angle of 5 to 30 degrees relative to the first planar area **54** and the second planar area **56.**

The gasket component **20** includes the stopper layer **28** directly attached to the functional layer **22** around the first opening **26** without another layer therebetween, as shown in Figure 1. The stopper layer **28** includes an upper surface **58** and an oppositely facing lower surface **60** which is attached to the upper surface **50** of the functional layer **22.** It is noted that although the terms "upper" and "lower" are used when describing the surfaces **58, 60** of the stopper layer **28**, the upper surface **58** could be disposed below the lower surface **60.**

The upper surface **58** and the lower surface **60** of the stopper layer **28** are typically planar around the entire circumference of the half embossment **32.** In other words, the stopper layer **28** is typically flat in the areas surrounding the half embossment **32.** The planar portion of the upper surface **58** and the planar portion of the lower surface **60** disposed between the full embossment. **24** and the half embossment **32** are together referred to as a first planar area **62.** The first planar area **62** of the stopper layer **28** is aligned with the first planar area **54** of the functional layer **22.** The planar portion of the upper surface **58** and the planar portion of the lower surface **60** of the stopper layer **28** disposed between the half embossment **32** of the stopper layer **28** and the first opening **26** is referred to as a second planar area **66,** The second planar area **66** of the stopper layer **28** is aligned with the second planar area **56** of the functional layer **22**. When the gasket component **20** is used in the cylinder head gasket **36,** the planar upper surface **58** and lower surface **60** of the stopper layer **28** are parallel to an upper surface of the engine block **40** and a lower surface of the cylinder head **38,**

The lower surface **60** of the stopper layer **28** is preferably laser welded to the upper surface **50** of the functional layer **22,** but can be attached using other methods. After laser welding, a gap could exist between the stopper layer **28** and the functional layer **22,** for example due to springback, but this gap would be closed when the stopper layer **28** and the functional layer **22** are under compression. The stopper layer **28** is typically formed of metal, such as steel or another metal. The stopper layer **28** of the gasket component **20** could alternatively be formed of rubber, or another non-metal material.

The stopper layer **28** also includes a first edge **64** presenting the first opening **26.** As shown in Figure 1, the first edge **64** of the stopper layer **28** at the first opening **26** is aligned with the first edge **42** of the functional layer **22** at the first opening **26.** The stopper layer **28** extends from the first edge **64** at the first opening **26** to a second edge **68** located along the first planar area **54** of the functional layer **22** between the half-stop **34** and the full embossment **24.** The total surface area presented by the stopper layer 28 is less than the total surface area of the functional layer **22.**

The upper surface **58** and the lower surface **60** of the stopper layer **28** also present a thickness **t₂** therebetween. The thickness **t₂** of the stopper layer **28** is less than the thickness **t₂** of the functional layer **22**. In the embodiment of Figure 1, the thickness **t₂** of the stopper layer **28** is equal to less than one half of the thickness **t₁** of the functional layer **22.** However, the thickness **t₂** of the stopper layer **28** and the thickness **t₁** of the functional layer **22** can vary depending on the application.

half embossment **32** of the stopper layer **28** is disposed radially between the first edge **64** and the full embossment **24,** and it is axially aligned with the half embossment **30** of the functional layer **22,** In the exemplary embodiments shown in the Figures, the stopper layer **28** is bent in two locations to form the half embossment **32.** Thus, the half embossment **32** of the stopper layer **28** extends at an angle relative to the first planar area **62** and the second planar area **66.** In this case, the upper surface **58** and the lower surface **60** along the first planar area **62** are parallel. The upper surface **58** and the lower surface **60** along the half embossment **32** are also parallel to one another but disposed at an angle relative to the adjacent second planar area **66.** In the exemplary embodiments, angle of the half embossment **32** of the stopper layer **28** is equal to the angle of the half embossment **30** of the functional layer **22**. Thus, the angle of the half embossment **32** is about 5 to 30 degrees relative to the first planar area **62** and the second area **66.**

As stated above, the functional layer **22** and the stopper layer **28** are formed simultaneously in a single process step to present the axially aligned half embossments **30, 32,** which together provide the half-stop **34,** adjacent the first opening **26.** This process step can include a single shaping, blanking, or bending step, after the stopper layer **28** has been joined to the functional layer **22**.

As shown in the Figures, the half embossment **30** of the functional layer **22** is disposed directly below the half embossment **32** of the stopper layer **28.** Typically, the stopper layer **28** and the functional layer **22** are bent together in two locations to form the half embossments **30, 32** which together form the half-stop **34.** The half-stop **34** is not parallel to the adjacent planar areas **54, 56, 62, 66.** At the first location, the stopper layer **28** and the functional layer **22** are bent at the same angle, which is about 5 to 30 degrees, relative to the first planar areas **54, 62.** At the second location, the stopper layer **28** and the functional layer **22** are also bent at the same angle, which is about 5 to 30 degrees, relative to the second planar areas **56, 66.** In the exemplary embodiments, the second location is closer to the first opening **26** than the first location. The half embossments **30, 32** also extend continuously around the first opening **26,** like the full embossment **24.**

In the embodiment of Figure 1, the half embossments **30, 32** and full embossment **24** extend outwardly and upwardly in the same direction relative to the first planar areas **54, 62.** However, the half embossments **30, 32** and full embossment **24** can also extend outwardly and downwardly in the same direction relative to the first planar areas **54, 62.** In another embodiment, the half embossments **30, 32** and full embossment. **24** each extend outwardly in opposite directions relative to the first planar areas **54, 62.**

As shown in Figure 3, when the gasket component **20** is used in a cylinder head gasket **36,** the half-stop **34** extends at an angle relative to the upper surface of the engine block **40** and the lower surface of the cylinder head **38** until compressed, in which case the half-stop **34** could possibly become flat. In addition, when the gasket component **20** is used in the cylinder head gasket **36,** the first planar areas **54, 62** extend parallel to the upper surface of the engine block **40** and the lower surface of the cylinder head **38**. The second planar areas **56, 66** can also extend at an angle relative to the upper surface of the engine block **40** and the lower surface of the cylinder head **38,** as shown in Figure 3, but could also become flat when compressed so that the gasket component **20** is flat around the first opening **26.**

During use of the gasket component **20** in a cylinder head gasket **36,** the half-stop **34** maintains the load from the cylinder head **38** on the stopper layer **28,** which limits the compression of the full embossment **24.** The half-stop **34** also protects the full embossment. **24,** and any protective coating (not shown) applied to the full embossment **24,** from combustion firing. In certain embodiments, the protective coating is a polymer coating and is disposed on at least one of the surfaces of the stopper layer **28** and on at least one of the surfaces of the functional layer **22** to enhance the performance and durability of the gasket component **20.** The coating has a thickness which is less than the thickness **t₂** of the stopper layer **28.**

In one embodiment, as shown in Figure 1, the gasket component **20** includes an additional half embossment **70,** formed only in the functional layer **22,** This additional half embossment **70** is disposed between the full embossment **24** and the second edge **46** presenting the second opening **48.** In the embodiment of Figure 1, the additional half embossment **70** mirrors the half embossment **30** formed in the functional layer **22** and the half embossment **32** formed in the stopper layer **28.** A third planar area **72** is located between the full embossment **24** and the additional half embossment **70,** and a fourth planar area **74** is located between the additional half embossment **70** and the second opening **48.** The additional half embossment **70** extends at an angle relative to the third planar area **72** and the fourth planar area **74.** In the embodiment of Figure 1, the additional half embossment **70** extends outwardly in the same direction as the half-stop **34,** but could alternatively extend in the opposite direction as the half-stop **34.**

Prior to compressing the gasket component **20** between the cylinder head 38 and the engine block **40**, the fourth planar area **74** of the functional layer **22** adjacent the second opening **48** is aligned with and is parallel to the first planar area **62** of the functional layer **22** adjacent the first opening **26,** as shown in Figure 1. However, after compressing the gasket component **20** between the cylinder head **38** and the engine block **40,** the gasket component **20** loses its parallelism, as shown in Figure 3.

The gasket component **20** comprising the half-stop **34** and the additional half embossment **70**, can have various designs, alternative to the design shown in Figure 1, depending on the application. Alternative exemplary designs are shown in Figures 4-7. The gasket component **120** of Figure 4 includes a design similar to the gasket component **20** of Figure 1. In the gasket component **220** of Figure 5, the full embossment **224** and the additional half embossment **270** extend in a direction opposite the half-stop **234.** In this embodiment, the full embossment **224** and the half embossment **270** extend toward the engine block **40** instead of toward the cylinder head **38.** In the gasket component **320** of Figure 6, the full embossment **324** and the additional half embossment **370** also extend in a direction opposite the half-stop **334.** In this embodiment, the half-stop **334** extends toward the engine block **40** instead of toward the cylinder head **38.** In the gasket component **420** of Figure 7, the additional half embossment **470** extends in a direction opposite the full embossment **424** and the half-stop **434.** In this embodiment, the half-stop **434** and the full embossment **424** extend toward the cylinder head 38 while the additional half embossment 470 extends toward the engine block **40.** For comparison purposes, a gasket component **520** including a Flexstop® is shown in Figure 8.

Another aspect of the invention provides a method of manufacturing the gasket component **20** including the full embossment **24** and the half-stop **34.** The method includes providing the functional layer **22,** which is typically blanked. Next, the stopper layer **28** is attached to the functional layer **22,** preferably by laser welding. However, other methods can be used to join the two layers **22, 28** together to effectively form a single layer. The functional layer **22** and stopper layer **28** also go through a secondary blanking step.

The method further includes forming the full embossment **24** in the functional layer **22** and forming the halt-stop **34** in the functional layer **22** and the stopper layer **28.** The step of forming the half-stop **34** is conducted in a single step, such as by bending or shaping the functional layer **22** and stopper layer **28** together in two locations, as discussed above. The full embossment **24** can be formed before or after the half-stop **34.** The method can also include forming the additional half embossment **70** in the functional layer **22,** either before or after forming the full embossment **24,** and either before or after forming the half-stop **34.**

The method can also include applying the protective coating to the exposed surfaces of the functional layer **22** and stopper layer **28,** for example by spraying. The step of applying the coaling can be conducted before or after the secondary blanking and forming steps.

As discussed above, the gasket component **20** can be used alone as a single layer gasket, or a single layer of the static multi-layer cylinder head gasket **36.** Alternatively, the gasket component **20** can be used in another type of gasket application, such any that would typically include embossments and stoppers.

Obviously, many modifications and variations 1 are possible in light of the above teachings and may be practiced otherwise than as specifically described while within the scope of the claims.

## Claims

1. A gasket for providing a seal between parts of an internal combustion engine, comprising:
a functional layer (22) extending radically from a first edge surrounding a first opening (26) to a second edge (46); said functional layer (22) including a full embossment (24) disposed between said first edge and said second edge (46); a stopper layer (28) attached to said functional layer (22) between said first edge and said full embossment (24); **characterised by**
said functional layer including a half embossment disposed between said first edge and said full embossment;
said stopper layer (28) including a half embossment (32) aligned with said half embossment (34) of said functional layer (22).

2. The gasket of claim 1, wherein said functional layer includes a first planar area between said full embossment and said half embossment and a second planar area between said half embossment and said first edge;
said half embossment of said functional layer is disposed at an angle relative to said first and second planar areas of said functional layer;
said stopper layer includes a first planar area aligned with said first planar area of said functional layer and a second planar area aligned with said second planar area of said functional layer;
said half embossment of said stopper layer is disposed at an angle relative to said first and second planar areas of said stopper layer; and
said angle of said half embossment of said stopper layer is equal to said angle of said half embossment of said functional layer.

3. The gasket of claim 2, wherein said angle of said half embossments is from 5 to 30 degrees.

4. The gasket of claim 2, wherein said half embossment and said full embossment of said functional layer extend outwardly in the same direction relative to said first planar area of said functional layer.

5. The gasket of claim 2, wherein said half embossment and said full embossment of said functional layer each extend outwardly in opposite directions relative to said first planar area of said functional layer.

6. The gasket of claim 2, wherein said functional layer includes an additional half embossment disposed between said full embossment and said second edge.

7. The gasket of claim 6, wherein said full embossment and said additional half embossment extend outwardly in the same direction relative to said first planar area of said functional layer.

8. The gasket of claim 6, wherein said full embossment and said additional half embossment each extend outwardly in opposite directions relative to said first planar area of said functional layer.

9. The gasket of claim 1, wherein said functional layer includes an upper surface and an oppositely facing lower surface;
said stopper layer includes an upper surface and an oppositely facing lower surface;
said surfaces of said functional layer and said surfaces of said stopper layer along said first planar areas and said second planar areas 1 are parallel to one another; and said surfaces of said functional layer and said surfaces of said stopper layer along said half embossments are parallel to one another.

10. The gasket of claim 9, wherein said lower surface of said stopper layer directly engages said upper surface of said functional layer.

11. The gasket of claim 9, wherein said upper surface and said lower surface of said functional layer present a thickness therebetween;
said upper surface and said lower surface of said stopper layer present a thickness therebetween; and
said thickness of said functional layer is greater than said thickness of said stopper layer.

12. The gasket of claim 11 including a coating disposed along at least one of said surfaces of said stopper layer and at least one of said surfaces of said functional layer, wherein said coating presents a thickness less than said thickness of said stopper layer.

13. The gasket of claim 9, wherein said upper surface along said full embossment presents a convex shape and said lower surface along said full embossment presents a concave shape.

14. The gasket of claim 1 wherein said half embossments extend continuously around said first opening.

15. The gasket of claim 1, wherein said full embossment extends continuously around said first opening.

16. A method of manufacturing a gasket for providing a seal between parts of an internal combustion engine, comprising the steps of:
providing a functional layer extending radially from a first edge surrounding a first opening to a second edge;
forming a full embossment in the functional layer between the first edge and the second edge;
attaching a stopper layer to the functional layer adjacent the first edge; and
forming a half embossment in the functional layer while simultaneously forming a half embossment in the stopper layer aligned with the half embossment of the functional layer after attaching the stopper layer to the functional layer.

17. The method of claim 16, wherein the step of forming the half embossments includes bending the functional layer and the stopper layer at two locations so that the half embossments are disposed at an angle relative to a first planar area located between the half embossments and the full embossment and at an angle relative to a second planar area located between the first edge and the half embossments.

18. The method of claim 17, wherein the angle of the embossments is 5 to 30 degrees.

19. The method of claim 16, wherein the step of attaching the stopper layer to the functional layer includes laser welding the stopper layer to the functional layer.

20. The method of claim 16 including forming an additional half embossment in the functional layer between the full embossment and the second edge.

## Patentansprüche

1. Dichtung zum Bereitstellen einer Abdichtung zwischen Teilen einer Brennkraftmaschine, umfassend:
eine Funktionsschicht (22), die sich radial von einem ersten Rand, der eine erste Öffnung (26) umgibt, zu einem zweiten Rand (46) erstreckt;
wobei die Funktionsschicht (22) eine Vollprägung (24) umfasst, die zwischen dem ersten Rand und dem zweiten Rand (46) angeordnet ist;
eine Stopperschicht (28), die an der Funktionsschicht (22) zwischen dem ersten Rand und der Vollprägung (24) angebracht ist;
**dadurch gekennzeichnet, dass**
die Funktionsschicht eine Halbprägung umfasst, die zwischen dem ersten Rand und der Vollprägung angeordnet ist;
wobei die Stopperschicht (28) eine Halbprägung (32) umfasst, die auf die Halbprägung (34) der Funktionsschicht (22) ausgerichtet ist.

2. Dichtung nach Anspruch 1, wobei die Funktionsschicht einen ersten ebenen Bereich zwischen der Vollprägung und der Halbprägung und einen zweiten ebenen Bereich zwischen der Halbprägung und dem ersten Rand umfasst;
die Halbprägung der Funktionsschicht im Verhältnis zu den ersten und zweiten ebenen Bereichen der Funktionsschicht in einem Winkel angeordnet ist;
die Stopperschicht einen ersten ebenen Bereich, der auf den ersten ebenen Bereich der Funktionsschicht ausgerichtet ist, und einen zweiten ebenen Bereich, der auf den zweiten ebenen Bereich der Funktionsschicht ausgerichtet ist, umfasst;
die Halbprägung der Stopperschicht im Verhältnis zu den ersten und zweiten ebenen Bereichen der Stopperschicht in einem Winkel angeordnet ist; und
der Winkel der Halbprägung der Stopperschicht gleich dem Winkel der Halbprägung der Funktionsschicht ist.

3. Dichtung nach Anspruch 2, wobei der Winkel der Halbprägungen von 5 bis 30 Grad reicht.

4. Dichtung nach Anspruch 2, wobei sich die Halbprägung und die Vollprägung der Funktionsschicht im Verhältnis zu dem ersten ebenen Bereich der Funktionsschicht in derselben Richtung nach außen erstrecken.

5. Dichtung nach Anspruch 2, wobei sich die Halbprägung und die Vollprägung der Funktionsschicht im Verhältnis zu dem ersten ebenen Bereich der Funktionsschicht jeweils in entgegengesetzten Richtungen nach außen erstrecken.

6. Dichtung nach Anspruch 2, wobei die Funktionsschicht eine zusätzliche Halbprägung umfasst, die zwischen der Vollprägung und dem zweiten Rand angeordnet ist.

7. Dichtung nach Anspruch 6, wobei sich die Vollprägung und die zusätzliche Halbprägung im Verhältnis zu dem ersten ebenen Bereich der Funktionsschicht in derselben Richtung nach außen erstrecken.

8. Dichtung nach Anspruch 6, wobei die Vollprägung und die zusätzliche Halbprägung im Verhältnis zu dem ersten ebenen Bereich der Funktionsschicht jeweils in entgegengesetzten Richtungen nach außen erstrecken.

9. Dichtung nach Anspruch 1, wobei die Funktionsschicht eine obere Oberfläche und eine gegenüberliegende untere Oberfläche umfasst;
die Stopperschicht eine obere Oberfläche und eine gegenüberliegende untere Oberfläche umfasst;
die Oberflächen der Funktionsschicht und die Oberflächen der Stopperschicht entlang der ersten ebenen Bereiche und der zweiten ebenen Bereiche zueinander parallel sind; und
die Oberflächen der Funktionsschicht und die Oberflächen der Stopperschicht entlang der Halbprägungen zueinander parallel sind.

10. Dichtung nach Anspruch 9, wobei die untere Oberfläche der Stopperschicht mit der oberen Oberfläche der Funktionsschicht direkt in Eingriff kommt.

11. Dichtung nach Anspruch 9, wobei die obere Oberfläche und die untere Oberfläche der Funktionsschicht eine Dicke dazwischen aufweisen;
die obere Oberfläche und die untere Oberfläche der Stopperschicht eine Dicke dazwischen aufweisen; und
die Dicke der Funktionsschicht größer als die Dicke der Stopperschicht ist.

12. Dichtung nach Anspruch 11, umfassend eine Beschichtung, die entlang mindestens einer der Oberflächen der Stopperschicht und mindestens einer der Oberflächen der Funktionsschicht angeordnet ist, wobei die Beschichtung eine Dicke aufweist, die geringer als die Dicke der Stopperschicht ist.

13. Dichtung nach Anspruch 9, wobei die obere Oberfläche entlang der Vollprägung eine konvexe Form aufweist und die untere Oberfläche entlang der Vollprägung eine konkave Form aufweist.

14. Dichtung nach Anspruch 1, wobei sich die Halbprägungen durchgehend um die erste Öffnung herum erstrecken.

15. Dichtung nach Anspruch 1, wobei sich die Vollprägung durchgehend um die erste Öffnung herum erstreckt.

16. Verfahren zum Herstellen einer Dichtung zum Bereitstellen einer Abdichtung zwischen Teilen einer Brennkraftmaschine, umfassend folgende Schritte:
Bereitstellen einer Funktionsschicht, die sich radial von einem ersten Rand, der eine erste Öffnung umgibt, zu einem zweiten Rand erstreckt;
Bilden einer Vollprägung in der Funktionsschicht zwischen dem ersten Rand und dem zweiten Rand;
Anbringen einer Stopperschicht an der Funktionsschicht neben dem ersten Rand; und
Bilden einer Halbprägung in der Funktionsschicht, wobei gleichzeitig eine Halbprägung in der Stopperschicht gebildet wird, die auf die Halbprägung der Funktionsschicht nach dem Anbringen der Stopperschicht an der Funktionsschicht ausgerichtet ist.

17. Verfahren nach Anspruch 16, wobei der Schritt des Bildens der Halbprägungen das Biegen der Funktionsschicht und der Stopperschicht an zwei Stellen umfasst, so dass die Halbprägungen in einem Winkel im Verhältnis zu einem ersten ebenen Bereich, der sich zwischen den Halbprägungen und der Vollprägung befindet, und in einem Winkel im Verhältnis zu einem zweiten ebenen Bereich, der sich zwischen dem ersten Rand und den Halbprägungen befindet, angeordnet sind.

18. Verfahren nach Anspruch 17, wobei der Winkel der Prägungen von 5 bis 30 Grad reicht.

19. Verfahren nach Anspruch 16, wobei der Schritt des Anbringens der Stopperschicht an der Funktionsschicht das Laserschweißen der Stopperschicht an die Funktionsschicht umfasst.

20. Verfahren nach Anspruch 16, umfassend das Bilden einer zusätzlichen Halbprägung in der Funktionsschicht zwischen der Vollprägung und dem zweiten Rand.

## Revendications

1. Joint d'étanchéité pour fournir une jointure étanche entre des pièces d'un moteur à combustion interne, comprenant :
une couche fonctionnelle (22) s'étendant radialement à partir d'un premier bord entourant une première ouverture (26) vers un second bord (46) ;
ladite couche fonctionnelle (22) inclut un gaufrage entier (24) disposé entre ledit premier bord et ledit second bord (46) ;
une couche d'arrêt (28) fixée à ladite couche fonctionnelle (22) entre ledit premier bord et ledit gaufrage entier (24) ;
**caractérisé par**
ladite couche fonctionnelle incluant un demi gaufrage disposé entre ledit premier bord et ledit gaufrage entier ;
ladite couche d'arrêt (28) incluant un demi gaufrage (32) aligné avec ledit demi gaufrage (34) de ladite couche fonctionnelle (22).

2. Joint d'étanchéité selon la revendication 1, dans lequel ladite couche fonctionnelle inclut une première zone planaire entre ledit gaufrage entier et ledit demi gaufrage et une seconde zone planaire entre ledit demi gaufrage et ledit premier bord ;
ledit demi gaufrage de ladite couche fonctionnelle est disposé à un angle par rapport auxdites première et seconde zones planaires de ladite couche fonctionnelle ;
ladite couche d'arrêt inclut une première zone planaire alignée avec ladite première zone planaire de ladite couche fonctionnelle et une seconde zone planaire alignée avec ladite seconde zone planaire de ladite seconde couche fonctionnelle ;
ledit demi gaufrage de ladite couche d'arrêt est disposé à un angle par rapport auxdites première et seconde zones planaires de ladite couche d'arrêt ; et
ledit angle dudit demi gaufrage de ladite couche d'arrêt est égal audit angle dudit demi gaufrage de ladite couche fonctionnelle.

3. Joint d'étanchéité selon la revendication 2, dans lequel ledit angle desdits demis gaufrages est compris entre 5 et 30 degrés.

4. Joint d'étanchéité selon la revendication 2, dans lequel ledit demi gaufrage et ledit gaufrage entier de ladite couche fonctionnelle s'étendent vers l'extérieur dans la même direction par rapport à ladite première zone planaire de ladite couche fonctionnelle.

5. Joint d'étanchéité selon la revendication 2, dans lequel ledit demi gaufrage et ledit gaufrage entier de ladite couche fonctionnelle s'étendent chacun vers l'extérieur dans des directions opposées par rapport à ladite première zone planaire de ladite couche fonctionnelle.

6. Joint d'étanchéité selon la revendication 2, dans lequel ladite couche fonctionnelle inclut un demi gaufrage additionnel disposé entre ledit gaufrage entier et ledit second bord.

7. Joint d'étanchéité selon la revendication 6, dans lequel ledit gaufrage entier et ledit demi gaufrage additionnel s'étendent vers l'extérieur dans la même direction par rapport à ladite première zone planaire de ladite couche fonctionnelle.

8. Joint d'étanchéité selon la revendication 6, dans lequel ledit gaufrage entier et ledit demi gaufrage additionnel s'étendent chacun vers l'extérieur dans des directions opposées par rapport à ladite première zone planaire de ladite couche fonctionnelle.

9. Joint d'étanchéité selon la revendication 1, dans lequel ladite couche fonctionnelle inclut une surface supérieure et une surface inférieure opposée lui faisant face ;
ladite couche d'arrêt inclut une surface supérieure et une surface inférieure opposée lui faisant face ;
lesdites surfaces de ladite couche fonctionnelle et lesdites surfaces de ladite couche d'arrêt conjointement auxdites premières zones planaires et secondes zones planaires sont parallèles les unes aux autres; et
lesdites surfaces de ladite couche fonctionnelle et lesdites surfaces de ladite couche d'arrêt conjointement auxdits demis gaufrages sont parallèles les unes aux autres.

10. Joint d'étanchéité selon la revendication 9, lequel ladite surface inférieure de ladite couche d'arrêt vient en prise directement avec ladite surface supérieure de ladite couche fonctionnelle.

11. Joint d'étanchéité selon la revendication 9, dans lequel ladite sera supérieure et ladite surface intérieure de ladite couche fonctionnelle présentent une épaisseur entre elles ;
ladite surface supérieure et ladite surface inférieure de ladite couche d'arrêt présentent une épaisseur entre elles;
ladite épaisseur de ladite couche fonctionnelle est supérieure à ladite épaisseur de ladite couche d'arrêt.

12. Joint d'étanchéité selon la revendication 11 incluant un revêtement disposé le long d'au moins une desdites surfaces de ladite couche d'arrêt et au moins une desdites surfaces de ladite couche fonctionnelle, dans lequel ledit revêtement présente une épaisseur inférieure à ladite épaisseur de ladite couche d'arrêt.

13. Joint d'étanchéité selon la revendication 9, dans lequel ladite surface supérieure le long dudit gaufrage entier présente une forme convexe et ladite surface inférieure le long dudit gaufrage entier présente une forme concave.

14. Joint d'étanchéité selon la revendication 1, dans lequel lesdits demis gaufrages s'étendent en continu autour de ladite première ouverture.

15. Joint d'étanchéité selon la revendication 1, dans lequel lesdits gaufrages entiers s'étendent en continu autour de ladite première ouverture.

16. Procédé de fabrication d'un joint d'étanchéité pour fournir une jointure étanche entre des pièces d'un moteur à combustion interne, comprenant les étapes consistant à :
fournir une couche fonctionnelle s'étendant radialement à partir d'un premier bord entourant une première ouverture vers un second bord ;
former un gaufrage entier dans la couche fonctionnelle entre le premier bord et le second bord ;
fixer une couche d'arrêt à la couche fonctionnelle adjacente au premier bord ; et
former un demi gaufrage dans la couche fonctionnelle tout en formant simultanément un demi gaufrage dans la couche d'arrêt alignée avec le demi gaufrage de la couche fonctionnelle après la fixation de la couche d'arrêt à la couche fonctionnelle.

17. Procédé selon la revendication 16, dans lequel l'étape de formation des demis gaufrages inclut de cintrer la couche fonctionnelle et la couche d'arrêt à deux emplacements de sorte que les demis gaufrages soient disposés à un angle par rapport à une première zone planaire située entre les demis gaufrages et le gaufrage entier et à un angle par rapport à une seconde zone planaire située entre le premier bord et les demis gaufrages.

18. Procédé selon la revendication 17, dans lequel l'angle des gaufrages est compris entre 5 et 30 degrés.

19. Procédé selon la revendication 16, dans lequel l'étape de fixation de la couche d'arrêt à la couche fonctionnelle inclut la soudure au laser de la couche d'arrêt à la couche fonctionnelle.

20. Procédé selon la revendication 16, incluant de former un demi gaufrage additionnel dans la couche fonctionnelle entre le gaufrage entier et le second bord.
